# EUROPÄISCHE PATENTSCHRIFT

(11) **EP 2 576 320 B1**
(45) Veröffentlichungstag und Bekanntmachung des Hinweises auf die Patenterteilung: **11.03.2015**
(21) Anmeldenummer: 11720812.4
(22) Anmeldetag: 24.05.2011
(51) Int. Cl.: B62D 3/08, F16H 57/00, B62D 5/04, F16C 25/08, F16H 25/24, F16C 27/04

(54) **KUGELUMLAUFGETRIEBE**
RECIRCULATING BALL GEAR
TRANSMISSION À RECIRCULATION DE BILLES

(30) Priorität: 25.05.2010 DE 102010029266
(43) Veröffentlichungstag der Anmeldung: 10.04.2013
(73) Patentinhaber: ZF-Lenksysteme GmbH, 73527 Schwäbisch Gmünd (DE)
(72) Erfinder: SPEIDEL, Gerd, 70329 Stuttgart (DE)
(86) Internationale Anmeldenummer: PCT/EP2011/058462
(87) Internationale Veröffentlichungsnummer: WO 2011/147824

(56) Entgegenhaltungen:
- WO-A1-2009/046792
- WO-A1-2010/033788
- WO-A1-2011/015374
- DE-A1-102008 041 872
- US-A1- 2003 121 714
- US-A1- 2005 205 342

## Beschreibung

Die Erfindung betrifft ein Kugelumlaufgetriebe gemäß dem Oberbegriff des Anspruchs 1.

Das gattungsgemäße Kugelumlaufgetriebe kann im Betrieb in axialer Richtung Stößen ausgesetzt werden, wodurch es im Laufe der Zeit zu Beschädigungen des Kugelumlaufgetriebes und zu störenden Klappergeräuschen infolge eines Spiels im Lager kommen kann.

Die DE 10 2007 048 075 A1 beschreibt ein Kugelumlaufgetriebe mit einem einseitig gefederten Lager. Die einseitig am Lager anliegende Feder hat die Aufgabe Kippmomente und eine Wärmeausdehnung auszugleichen und gleichzeitig das Lager in einem Gehäuse zu fixieren. Aufgrund der einseitigen Federung des Lagers können mit dieser Konstruktion jedoch keine Stöße aufgenommen werden, da diese im Betrieb immer in Richtung der gegenüberliegenden Stirnseiten wirken.

In der DE 10 2008 041 872 A1 und der US 2003/0121714 A1 wird eine Lenkung mit einem Schraubengetriebe und einem Wälzlager beschrieben, bei dem ein Außenring des Wälzlagers an seinen Seitenflanken eine Polsterung aufweist.

Die US 2005/0205342 A1 offenbart ebenfalls eine Lenkung mit einem Schraubengetriebe und einem Wälzlager, wobei an den Seitenflanken des Wälzlagers jedoch ein Anschlagring angeordnet ist.

Die Erfindung hat die Aufgabe bei einem Kugelumlaufgetriebe der eingangs genannten Art in axialer Richtung wirkende stoßartige Belastungen auch dann zuverlässig zu dämpfen, wenn das Verhältnis zwischen einem Spiel im Lager und einem zur Dämpfung benötigten Federweg nur sehr gering ist.

Die Erfindung löst die gestellte Aufgabe mit einem gattungsgemäßen Kugelumlaufgetriebe gemäß dem kennzeichnenden Teil des Anspruchs 1. Auf diese Weise können insbesondere aufgrund des steilen Verlaufs im progressiven Bereich der Kennlinie stoßartige Belastungen in axialer Richtung des Lagers zuverlässig gedämpft werden. Folglich werden auch störende Klappergeräusche infolge eines Spiels im Lager deutlich reduziert.

Die Federelemente können eine bestimmte Vorspannung aufweisen, wobei ein Vorspannweg und eine Vorspannkraft im Bereich einer geringen Steigung des progressiven Bereichs der Kennlinie liegen. Auf diese Weise können die Klappergeräusche, die aus dem Spiel im Lager resultieren, gedämpft werden. Da das Spiel verglichen mit dem zur Dämpfung benötigten Federweg jedoch in der Regel relativ gering ist, liegen der Vorspannweg und die Vorspannkraft in der Nähe des Übergangs, hinter dem die Kennlinie steil ansteigt.

Um die Kennlinie ganz spezifisch gestalten zu können, können die Federelemente parallel und/oder seriell geschaltet werden.

Vorzugsweise können die Federelemente eine Wellfeder und/oder eine Tellerfeder sein, da mit ihr der jeweils gewünschte progressive Bereich der Kennlinie kostengünstig realisiert werden kann. Außerdem kann dieser Bereich der Kennlinie auch mit Scheiben aus Elastomeren dargestellt werden.

Die Erfindung betrifft außerdem eine Lenkung für ein Kraftfahrzeug, insbesondere eine Lenkung mit elektrischer Hilfskraftunterstützung, die erfindungsgemäß das Kugelumlaufgetriebe nach einem der Ansprüche 1 bis 8 aufweist.

Nachfolgend wird ein Ausführungsbeispiel der Erfindung anhand der beiliegenden Zeichnungen mehr erläutert.

Im Einzelnen zeigen:
- Fig. 1: eine Schnittansicht durch ein Kugelumlaufgetriebe;
- Fig. 2: eine Schnittansicht durch ein Lager;
- Fig. 3: eine Schnittansicht durch eine zweite Ausführungsform des Lagers;
- Fig. 4: eine Kennlinie eines Federelements.

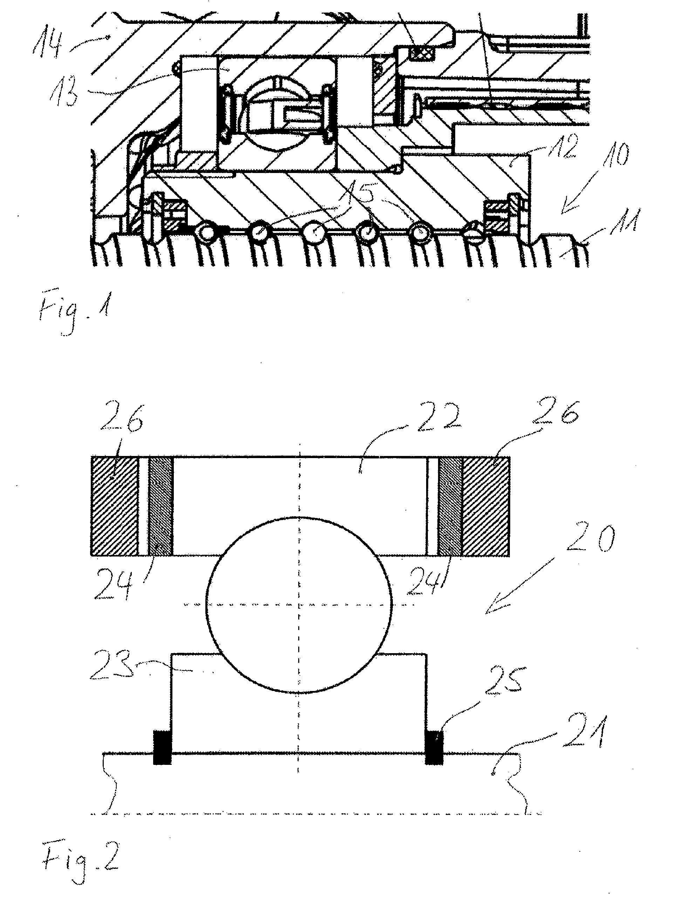

Fig. 1 zeigt ein Kugelumlaufgetriebe 10 mit einer Gewindespindel 11 und einer darauf angeordneten Mutter 12 einer hier nicht näher dargestellten Lenkung eines Kraftfahrzeugs. Auf der Mutter 12 sitzt ein Wälzlager 13, das von einem Gehäuse 14 umgeben ist. Zwischen der Mutter 12 und der Gewindespindel 11 sind Kugeln 15 angeordnet. Somit kann durch Rotation der Mutter 12 die Gewindespindel 11 in axialer Richtung nach links und nach rechts bewegt werden. Ferner können durch eine Fahrbahn, über die ein mit dem Kugelumlaufgetriebe 10 ausgestattetes Fahrzeug fährt, Stöße in axialer Richtung auf die Gewindespindel 11 übertragen und somit an die Mutter 12 und das Wälzlager 13 weitergegeben werden.

Fig. 2 zeigt ein Lager 20, das auf einer Mutter 21 sitzt. Das Lager weist einen Außenring 22 und einen Innenring 23 auf. Zwischen dem Außenring 22 und Anschlagelementen 26 ist an den Stirnseiten des Lagers 20 jeweils ein Federelement 24 angeordnet, wobei das Federelement 24 im dargestellten Fall eine Wellfeder ist. Die Federelemente 24 dämpfen stoßartige Belastungen, die in axialer Richtung auf das Lager 20 wirken. Solche stoßartigen Belastungen treten im Betrieb der Lenkung auf, wenn die Mutter 21 anfängt zu rotieren oder die Rotationsrichtung geändert wird. Aufgrund eines unvermeidbaren Spiels im Lager 20 würden hörbare Klappergeräusche entstehen, wenn die Federelemente 24 nicht die stoßartigen Belastungen dämpfen würden.

Die Anschlagelemente 26 definieren den Federweg der Federelemente 24. Der Innenring 23 ist mit einem Befestigungsring 25 an der Mutter 21 formschlüssig angeordnet. Somit können axial wirkende Bewegungen und Belastungen von der Mutter 21 auf das Lager 20 übertragen werden.

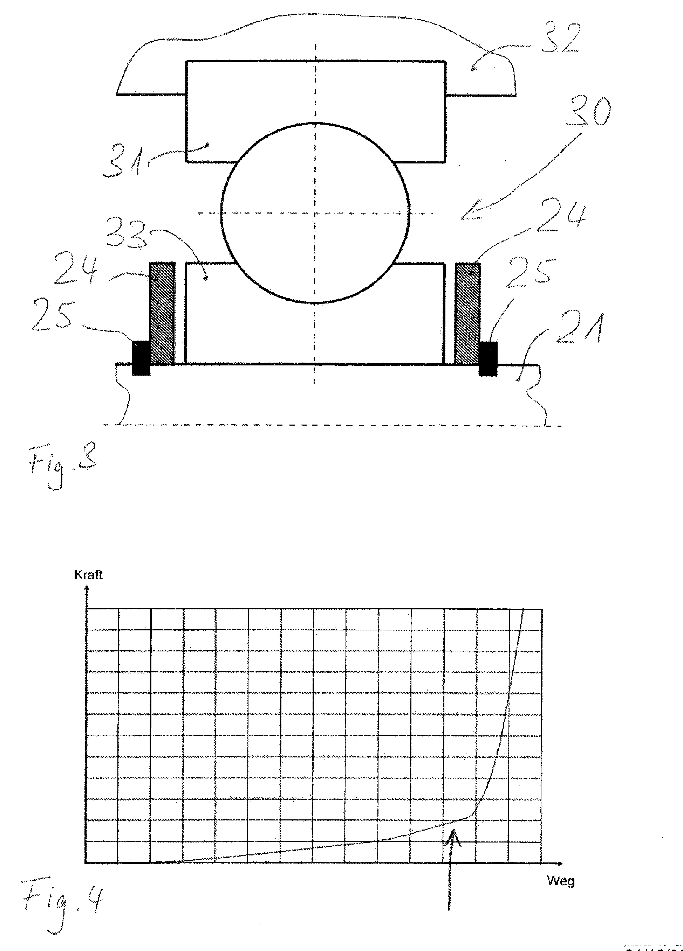

Fig. 3 zeigt ein Lager 30, bei dem ein Außenring 31 in ein Gehäuse 32 eingepasst ist, so dass das Lager 30 in axialer Richtung fixiert ist. Ein Innenring 33 ruht auf der Mutter 21. Zwischen den Befestigungsringen 25 und dem Innenring 33 ist das als Wellfeder ausgebildete Federelement 24 angeordnet. Die Federelemente dämpfen somit die stoßartigen Belastungen, die in axialer Richtung auf das Lager 30 wirken. Ferner werden dadurch Klappergeräusche aufgrund des Spiels im Lager 30 reduziert, so dass sie nicht zu hören sind.

Fig. 4 zeigt eine Kennlinie der Federelemente 24. Die Kennlinie weist einen ausschließlich progressiven Verlauf auf. Um die stoßartigen Belastungen besonders zuverlässig dämpfen zu können, ist hauptsächlich der flache Verlauf der Kennlinie relevant. Der steil ansteigende Bereich der Kennlinie verhindert, dass die Federelemente 24 so weit zusammengedrückt werden, dass stoßartige Belastungen auf das Gehäuse 14 und 32 ausgeübt werden. Um das Spiel im Lager 20 und die damit zusammenhängenden Klappergeräusche zu vermeiden, können die Federelemente 24 vorgespannt werden, wobei ein Vorspannweg und eine Vorspannkraft im Bereich der geringeren Steigung der Kennlinie liegen. Da das Spiel im Lager 20 verglichen mit dem zur Dämpfung benötigten Federweg relativ gering ist, liegen der Vorspannweg und die Vorspannkraft in der Nähe des Übergangs, hinter dem die Kennlinie steil ansteigt. Der Vorspannweg kann sich deshalb beispielsweise im Bereich des Pfeils in Fig. 3 befinden.

### Bezugszeichenliste

- 10: Kugelumlaufgetriebe
- 11: Gewindespindel
- 12: Mutter
- 13: Wälzlager
- 14: Gehäuse
- 15: Kugel

- 20: Lager
- 21: Mutter
- 22: Außenring
- 23: Innenring
- 24: Federelement
- 25: Befestigungsring
- 26: Anschlagelement

- 30: Lager
- 31: Außenring
- 32: Gehäuse
- 33: Innenring

## Patentansprüche

1. Kugelumlaufgetriebe (10), insbesondere für eine Lenkung eines Kraftfahrzeugs, mit einer mittels eines Lagers (13, 20) in einem Gehäuse (14, 32) gelagerten Mutter (21), wobei an jeder Stirnseite des Lagers (13, 20, 30) zwischen dem Lager (13, 20, 30) und dem Gehäuse (14) mindestens ein Federelement (24) angeordnet ist, **dadurch gekennzeichnet, dass** die Federelemente (24) ausschließlich im progressiven Bereich einer Kennlinie betrieben werden und der Vorspannweg und die Vorspannkraft in der Nähe eines Übergangs liegen, hinter dem die Kennlinie steil ansteigt.

2. Kugelumlaufgetriebe (10) nach Anspruch 1, **dadurch gekennzeichnet, dass** die Federelemente (24) eine bestimmte Vorspannung aufweisen, wobei eine Vorspannkraft und ein Vorspannweg im Bereich einer geringen Steigung des progressiven Bereichs der Kennlinie liegen.

3. Kugelumlaufgetriebe (10) nach Anspruch 1 oder 2, **dadurch gekennzeichnet, dass** die Federelemente (24) parallel und/oder seriell geschaltet sind.

4. Kugelumlaufgetriebe (10) nach einem der Ansprüche 1 bis 3, **dadurch gekennzeichnet, dass** die Federelemente (24) eine Wellfeder und/oder eine Tellerfeder sind.

5. Kugelumlaufgetriebe (10) nach einem der Ansprüche 1 bis 4, **dadurch gekennzeichnet, dass** das Lager (13, 20) ein einen Außenring (22) aufweisendes Wälzlager ist, wobei die Federelemente (24) am Außenring (22) anliegen.

6. Kugelumlaufgetriebe (10) nach einem der Ansprüche 1 bis 5, **dadurch gekennzeichnet, dass** zwischen den Federelementen (24) und dem Gehäuse (14) ein Anschlagelement (26) vorgesehen ist.

7. Kugelumlaufgetriebe (10) nach Anspruch 5 oder 6, **dadurch gekennzeichnet, dass** ein Innenring (23) des Lagers (20) auf der Mutter (21) sitzt und der Innenring (23) an der Mutter (21) mittels Befestigungsringen (25) befestigt ist.

8. Kugelumlaufgetriebe (10) nach einem der Ansprüche 1 bis 4, **dadurch gekennzeichnet, dass** die Federelemente (24) am Innenring (33) des Wälzlagers (30) anliegen.

9. Lenkung für ein Kraftfahrzeug, insbesondere Lenkung mit elektrischer Hilfskraftunterstützung, **dadurch gekennzeichnet, dass** sie das Kugelumlaufgetriebe (10) nach einem der Ansprüche 1 bis 8 aufweist.

## Claims

1. Recirculating ball gear (10), in particular for steering a motor vehicle, with a nut (21) mounted in a housing (14, 32) by means of a bearing (13, 20), at least one spring element (24) being arranged on each end face of the bearing (13, 20, 30) between the bearing (13, 20, 30) and the housing (14), **characterized in that** the spring elements (24) are operated solely in the progressive region of a characteristic curve, and the prestressing travel and prestressing force lie in the vicinity of a transition behind which the characteristic curve rises steeply.

2. Recirculating ball gear (10) according to Claim 1, **characterized in that** the spring elements (24) have a specific prestress, a prestressing force and prestressing travel lying in the region of a slight rise of the progressive region of the characteristic curve.

3. Recirculating ball gear (10) according to Claim 1 or 2, **characterized in that** the spring elements (24) are connected in parallel and/or in series.

4. Recirculating ball gear (10) according to one of Claims 1 to 3, **characterized in that** the spring elements (24) are a corrugated spring and/or a cup spring.

5. Recirculating ball gear (10) according to one of Claims 1 to 4, **characterized in that** the bearing (13, 20) is a rolling bearing having an outer ring (22), the spring elements (24) bearing against the outer ring (22).

6. Recirculating ball gear (10) according to one of Claims 1 to 5, **characterized in that** a stop element (26) is provided between the spring elements (24) and the housing (14).

7. Recirculating ball gear (10) according to Claim 5 or 6, **characterized in that** an inner ring (23) of the bearing (20) is seated on the nut (21), and the inner ring (23) is fastened to the nut (21) by means of fastening rings (25).

8. Recirculating ball gear (10) according to one of Claims 1 to 4, **characterized in that** the spring elements (24) bear against the inner ring (33) of the rolling bearing (30).

9. Steering for a motor vehicle, in particular steering with electrical power assistance, **characterized in that** it has the recirculating ball gear (10) according to one of Claims 1 to 8.

## Revendications

1. Transmission à recirculation de billes (10), en particulier pour une direction d'un véhicule automobile, comprenant un écrou (21) monté dans un boîtier (14, 32) au moyen d'un palier (13, 20), au moins un élément de ressort (24) étant disposé entre le palier (13, 20, 30) et le boîtier (14) sur chaque côté frontal du palier (13, 20, 30), **caractérisée en ce que** les éléments de ressort (24) fonctionnent seulement dans la région progressive d'une courbe caractéristique et la course de précontrainte et la force de précontrainte se situent à proximité d'une transition derrière laquelle la courbe caractéristique s'élève de façon abrupte.

2. Transmission à recirculation de billes (10) selon la revendication 1, **caractérisée en ce que** les éléments de ressort (24) présentent une précontrainte définie, une force de précontrainte et une course de précontrainte se situant dans la région d'une faible pente de la région progressive de la courbe caractéristique.

3. Transmission à recirculation de billes (10) selon la revendication 1 ou 2, **caractérisée en ce que** les éléments de ressort (24) sont connectés en parallèle et/ou en série.

4. Transmission à recirculation de billes (10) selon l'une quelconque des revendications 1 à 3, **caractérisée en ce que** les éléments de ressort (24) sont un ressort ondulé et/ou une rondelle-ressort.

5. Transmission à recirculation de billes (10) selon l'une quelconque des revendications 1 à 4, **caractérisée en ce que** le palier (13, 20) est un palier à roulement comprenant une bague extérieure (22), les éléments de ressort (24) s'appliquant contre la bague extérieure (22).

6. Transmission à recirculation de billes (10) selon l'une quelconque des revendications 1 à 5, **caractérisée en ce qu'**un élément de butée (26) est prévu entre les éléments de ressort (24) et le boîtier (14).

7. Transmission à recirculation de billes (10) selon la revendication 5 ou 6, **caractérisée en ce qu'**une bague intérieure (23) du palier (20) repose sur l'écrou (21) et la bague intérieure (23) est fixée à l'écrou (21) au moyen de bagues de fixation (25).

8. Transmission à recirculation de billes (10) selon l'une quelconque des revendications 1 à 4, **caractérisée en ce que** les éléments de ressort (24) s'appliquent contre la bague intérieure (33) du palier à roulement (30).

9. Direction pour un véhicule automobile, en particulier direction à servo-assistance électrique, **caractérisée en ce qu'**elle comprend la transmission à recirculation de billes (10) selon l'une quelconque des revendications 1 à 8.
